# EUROPÄISCHE PATENTSCHRIFT

(11) **EP 0 471 214 B1**
(45) Veröffentlichungstag und Bekanntmachung des Hinweises auf die Patenterteilung: **05.06.1996**
(21) Anmeldenummer: 91112285.1
(22) Anmeldetag: 23.07.1991
(51) Int. Cl.: C09B 67/00

(54) **Dispergiermittel für Farbmittelzubereitungen**
Dispersing agents for coloring compositions
Agents dispersants pour compositions de coloration

(30) Priorität: 01.08.1990 DE 4024422
(43) Veröffentlichungstag der Anmeldung: 19.02.1992
(73) Patentinhaber: BASF Aktiengesellschaft, D-67063 Ludwigshafen (DE)
(72) Erfinder: Herrmann, Manfred, Dr., W-6700 Ludwigshafen (DE); Belde, Horst, W-6700 Ludwigshafen (DE); Denzinger, Walter, W-6720 Speyer (DE); Leiter, Herbert, Dr., W-6800 Mannheim 1 (DE); Zimmermann, Norbert, W-6701 Waldsee (DE)

(56) Entgegenhaltungen:
- DE-A- 2 734 204
- DE-A- 2 816 539

## Beschreibung

Die vorliegende Erfindung betrifft neue als Dispergiermittel für Farbmittelzubereitungen geeignete Mischungen aus
A) 10 bis 70 Gew.-% eines wasserlöslichen Salzes eines Copolymerisates aus
   a) 40 bis 80 Gew.-% eines Vinylaromaten,
   b) 20 bis 60 Gew.-% einer olefinisch ungesättigten Säure und/oder eines olefinisch ungesättigten Säureanhydrids und
   c) 0 bis 20 Gew.-% weiterer Monomerer,
B) 30 bis 90 Gew.-% eines Dextrins und gegebenenfalls eines natürlichen Proteins und
C) 0 bis 10 Gew.-% weiterer üblicher Dispergiermittel.

Außerdem betrifft die Erfindung die Verwendung dieser Mischungen als Dispergiermittel für Farbmittelzubereitungen, ein Verfahren zur Herstellung dieser Farbmittelzubereitungen sowie diese Zubereitungen.

Als Dispergiermittel für Farbmittel werden üblicherweise Ligninsulfonate, Naphthalinsulfonsäure-Formaldehyd-Kondensate oder Sulfonate von Phenol-Formaldehyd-Kondensaten verwendet.

Diese Hilfsstoffe sind jedoch nur zu einem geringen Teil in Kläranlagen biologisch abbaubar und können somit zur Belastung der Oberflächengewässer beitragen.

In der DE-A 27 34 204 werden Copolymerisate aus Styrol und Acrylsäure im Gewichtsverhältnis von 50 : 50 bis 70 : 30 und aus Styrol, Acrylsäure und Maleinsäureanhydrid im Gewichtsverhältnis von 50 : 40 : 10 bis 70 : 24 : 6 in Form von wasserlöslichen Salzen als Dispergiermittel für Farbstoffe beschrieben.

Diese Copolymerisate sind wesentlich weniger umweltbelastend als die oben genannten Dispergiermittel und zeigen auch eine akzeptable Dispergierwirkung. Trotzdem sind aber die dispergierenden Eigenschaften noch weiter verbesserungsbedürftig.

So zeigen diese Copolymerisate gerade bei pulverförmigen Farbstoffzubereitungen unzureichende thermische Stabilitäten, indem sie zum Verkleben der durch die Sprühtrocknung erhaltenen Farbstoffteilchen führen. Dies wirkt sich negativ auf die Redispergierbarkeit des Farbstoffpulvers in Wasser aus. Des weiteren lassen sich derartige Pulver nur unzureichend entstauben, da die üblichen Entstaubungsöle bei längerer Lagerung zu einer deutlichen Abnahme der Feinverteilung führen.

Aus der Literatur ist die Verwendung von natürlichen Eiweißstoffen als Schutzkolloide und Dispergiermittel bekannt. So empfiehlt Athey in Tappi, Bd. 58, Nr. 10, S. 55-61 (1975) unter anderem Casein als Dispergiermittel für Pigmente bei der Papierbeschichtung. Die EP-B 018 947 betrifft Casein in Form seines Ammoniumsalzes als Emulgiermittel beim Färben von Polyestergewebe.

Die natürlichen Proteine und ihre Salze sind biologisch nahezu vollständig abbaubar, jedoch lassen ihre redispergierenden Eigenschaften im Hinblick auf Farbmittelzubereitungen, vor allem bezüglich der Dispersionsstabilität, zu wünschen übrig.

In der DE-A 28 16 539 sind wäßrige Farbstoffzubereitungen aus mindestens einem wasserunlöslichen Farbstoff, einem Dispergiermittel, einem Zusatzmittel und einem wasserlöslichen carboxylgruppenhaltigen Polymerisationsprodukt beschrieben. Als Zusatzmittel sind u.a. Sacharide und Polysacharide zur Verbesserung der Redispergierbarkeit erwähnt. Als Comonomere in den einzusetzenden Polymerisationsprodukten sind neben ungesättigten Monocarbonsäuren wie Acrylsäure u.a. ungesättigte aromatische Kohlenwasserstoffe aufgeführt. Empfohlen werden diese Mittel ausschließlich für die Herstellung wäßriger, gut redispergierbarer Zubereitungen, da sie wie die Copolymerisate gemäß DE-A 27 34 204 aufgrund mangelnder thermischer Stabilität für Pulverzubereitungen ungeeignet sind. Derartige Pulver würden zudem bei Behandlung mit den üblichen Entstaubungsmitteln und längerer Lagerung agglomerieren.

Der vorliegenden Erfindung lag daher die Aufgabe zugrunde, Dispergiermittel bereitzustellen, die bei nahezu vollständiger biologischer Abbaubarkeit oder Eliminierbarkeit in ihren dispergierenden Eigenschaften den hohen Anforderungen für Farbmittelzubereitungen gerecht werden.

Demgemäß wurden die eingangs definierten Mischungen gefunden. Ferner wurden ihre Verwendung als Dispergiermittel für Farbmittelzubereitungen, ein Verfahren zur Herstellung dieser Farbmittelzubereitungen sowie diese Zubereitungen gefunden.

Die erfindungsgemäßen Mischungen werden aus 10 bis 70 Gew.-%, vorzugsweise 20 bis 50 Gew.-% eines wasserlöslichen Salzes eines Copolymerisates als Komponente A und 30 bis 90 Gew.-%, vorzugsweise 50 bis 80 Gew.-% eines Dextrins und gegebenenfalls eines natürlichen Proteins als Komponente B hergestellt. Außerdem können die erfindungsgemäßen Mischungen aus bis zu 10 Gew.-% weiteren üblichen Dispergiermitteln, wie sie vor allem für Farbmittelzubereitungen verwendet werden, als Komponente C mitaufgebaut sein.

Die Copolymerisate A bestehen ihrerseits aus 40 bis 80 Gew.-%, vorzugsweise 50 bis 75 Gew.-% eines oder mehrerer Vinylaromaten als Comonomeren (a) und aus 20 bis 60 Gew.-%, vorzugsweise 25 bis 50 Gew.-% einer olefinisch ungesättigten Säure und/oder eines olefinisch ungesättigten Säureanhydrids als Comonomeren (b). Außerdem können die Copolymerisate A bis zu 20 Gew.-% weitere Monomere (c) enthalten.

Als Comonomere (a) eignen sich besonders Styrol und α-Methylstyrol. Daneben kommen kernsubstituierte Styrolderivate mit C₁-C₄-Alkylgruppen, beispielsweise die Methylstyrole, die Dimethylstyrole, die Diethylstyrole, die Isopropylstyrole, die tert.-Butylstyrole und Mischungen der Vinylaromaten in Betracht.

Als Comonomere (b) kommen olefinisch ungesättigte Säuren und/oder olefinisch ungesättigte Säureanhydride in Betracht. Besonders bevorzugt sind Acrylsäure und Maleinsäureanhydrid. Weiterhin eignen sich Methacrylsäure, Crotonsäure, Fumarsäure und Itaconsäure.

Als zusätzliche Monomere (c) kommen bevorzugt Butadien, Isopren, Vinylacetat, Vinylpropionat und N-Vinylpyrrolidon in Betracht. Besonders bevorzugte Monomere (c) sind Acrylnitril, Acrylamid, Methacrylamid, 2-Hydroxyethylmethacrylat und vor allem 2-Acrylamido-2-methylpropansulfonsäure. Daneben eignen sich Natriumvinylsulfonat, Natriummethallylsulfonat, Methylacrylat, Ethylacrylat, Butylacrylat, Methylmethacrylat, Maleinsäuremonomethylester, Allylalkohol und die Acrylsäureester des Ethylenglykolmonomethylethers, des Ethylenglykolmonoethylethers, des Diethylenglykolmonomethylethers und des Diethylenglykolmonoethylethers.

Als Komponente B eignen sich Dextrine und natürliche Proteine.

Bevorzugte Dextrine sind gut kaltwasserlösliche Weiß- und Gelb-Kartoffeldextrine sowie Maltodextrine, die keine wesentlichen Mengen von Mono- und Disachariden enthalten. Besonders bevorzugt sind Gelbdextrine, die aufgrund ihrer niedrigen Viskosität von 60 bis 80 mPa·s (dünnkochende Gelbdextrine) oder von 125 bis 160 mPa·s (mittelkochende Gelbdextrine) auch in Konzentrationen um 40 % noch gut fließfähig sind.

Die Viskositäten wurden in einem Rotationsviskosimeter (Haake, Rotavisko) bei 20°C und einem Schergefälle von 127 s⁻¹ gemessen.

Besonders bevorzugte natürliche gut wasserlösliche Proteine sind Casein (Milcheiweiß) und Collagen (Bestandteil von Sehnen, Bändern, Haut-, Knorpel- und Knochensubstanz). Bevorzugt ist die durch teilweisen hydrolytischen Abbau von Collagen gewonnene Gelatine (Knochengelatine, Hautgelatine).

Als Komponente C eignen sich weitere übliche Dispergiermittel, wie sie vor allem für Farbmittelzubereitungen verwendet werden. Besonders gute Ergebnisse erzielt man mit Acylaminoalkansulfonaten wie Oleylmethyltaurid und den Oxalkylierungsprodukten des Ethylendiamins mit 30 - 80 mol Propylenoxid und 35 - 120 mol Ethylenoxid. Bevorzugt sind Ligninsulfonate und Naphthalinsulfonsäure-Formaldehyd-Kondensationsprodukte. Daneben sind stickstoffhaltige, gut wasserlösliche Verbindungen wie oxalkyliertes Oleylamin mit 10 - 20 mol Ethylenoxid, oxalkyliertes Oleylmonoethanolamid mit 5 bis 15 mol Ethylenoxid, Oleylmonoethanolamid, Oleyldiethanolamid und Oleyltriethanolaminester zu nennen.

Die erfindungsgemäß einzusetzenden wasserlöslichen Salze der Copolymerisate A sind bekannt (DE-A-27 34 204) oder nach bekannten Methoden erhältlich.

Im Hinblick auf die Farbmittelzubereitungen besonders bevorzugte Copolymerisate A sind solche aus
- 50 bis 70 Gew.-% Styrol und
   30 bis 50 Gew.-% Acrylsäure.

Bevorzugt sind Copolymerisate A aus
- 50 bis 70 Gew.-% Styrol,
   6 bis 10 Gew.-% Acrylsäure und
   24 bis 40 Gew.-% Maleinsäureanhydrid,
- 25 bis 35 Gew.-% Styrol,
   25 bis 35 Gew.-% α-Methylstyrol und
   30 bis 50 Gew.-% Acrylsäure und
- 50 bis 70 Gew.-% Styrol,
   20 bis 45 Gew.-% Acrylsäure und
   5 bis 10 Gew.-% 2-Acrylamido-2-methylpropansulfonsäure.

Diese Copolymerisate sind nach den üblichen Methoden der radikalischen Lösungspolymerisation erhältlich, besonders bevorzugt durch das in der EP-A 0 100 443 beschriebene Verfahren, wonach die Copolymerisate bei 200 bis 400°C durch kontinuierliche Massepolymerisation in Abwesenheit von Polymerisationsinitiatoren und Reglern hergestellt werden. Die erfindungsgemäß zu verwendenden Copolymerisate weisen bevorzugt K-Werte von 10 bis 60, besonders 12 bis 40, auf.

Die K-Werte werden nach Fikentscher, Cellulose-Chemie, Bd. 13, S. 58 bis 64 (1932) bei 25°C in 1 %iger wäßriger Lösung der auf pH 8 bis 9 gestellten Salzlösungen gemessen und stellen ein Maß für das Molgewicht dar.

Die Copolymerisate werden in einer teilweise oder vollständig mit Alkalimetallhydroxiden, beispielsweise Natrium-, Kalium-oder Lithiumhydroxid, Ammoniak oder Alkanolaminen wie Triethanolamin, Tri-n-propanolamin, Triisopropanolamin oder Tetrahydroxypropylethylendiamin, neutralisierten Form in wäßriger Lösung eingesetzt.

Die als Komponente B bevorzugt einzusetzenden Gelbdextrine entstehen durch trockenes Erhitzen von mit Säure behandelter Stärke oder durch enzymatischen Abbau der Stärke. Die Hydrolyse überführt die schlecht wasserlösliche Stärke in gut kaltwasserlösliche Dextrine.

Die Mischungen gemäß der Erfindung können als Dispergiermittel für Farbmittelzubereitungen verwendet werden.

Die erfindungsgemäßen Farbmittelzubereitungen sind entweder in Pulver-oder Granulatform vorliegende Feststoffe oder stabile wäßrige Dispersionen.

Unter Farbmitteln sind Farbstoffe, beispielsweise Textilfarbstoffe, und Pigmente zu verstehen. Bei den Farbstoffen handelt es sich in der Regel um in Wasser schwerlösliche bis unlösliche Substanzen. Als solche kommen Dispersions- und Küpenfarbstoffe in Betracht.

Die Dispersionsfarbstoffe umfassen vor allem Vertreter aus den Klassen der Azo-, Anthrachinon- und Chinophthalon-Farbstoffe.

Die Mengen an Dispergiermittel in den erfindungsgemäßen Farbmittelzubereitungen richten sich vor allem danach, ob eine feste oder flüssig-wäßrige Zubereitung hergestellt werden soll.

Erfindungsgemäße feste Zubereitungen enthalten 0,1 bis 10 Gew.-Teile, vorzugsweise 0,5 bis 2 Gew.-Teile und erfindungsgemäße flüssig-wäßrige Zubereitungen 0,1 bis 5 Gew.-Teile, vorzugsweise 0,2 bis 1 Gew.-Teile der als Dispergiermittel geeigneten Mischungen pro Gew.-Teil des Farbmittels.

Besonders vorteilhafte Farbmittelzubereitungen sind solche, die neben den Komponenten A und B zusätzlich weitere, in Farbmittelzubereitungen übliche Dispergiermittel C enthalten, die im allgemeinen in Mengen von bis zu 10 Gew.-%, vorzugsweise von 2 bis 5 Gew.-% eingesetzt werden.

Flüssig-wäßrige Farbmittelzubereitungen enthalten neben den Farbmitteln und Dispergiermitteln üblicherweise 40 bis 90 Gew.-%, bezogen auf die Gesamtmenge der wäßrigen Dispersion, Wasser oder ein Gemisch aus Wasser und Retentionsmitteln, die der Verdunstung des Wassers entgegenwirken.

Bevorzugte Retentionsmittel sind Sorbit, Ethylenglykol, Diethylenglykol, Triethlyenglykol, Propylenglykol, Dipropylenglykol, Diethylenglykolmonobutylether, Glycerin, 2-Butin-1,4-diol und 2-Methoxypropan-1-ol.

Außerdem können den erfindungsgemäßen Farbmittelzubereitungen weitere übliche Hilfsmittel, im allgemeinen in Mengen bis zu 15 Gew.-%, bezogen auf die Gesamtfarbmittelzubereitung, zugesetzt werden. Beispiele solcher Hilfsmittel sind:
- Konservierungsmittel (Biozide) zur Verhinderung des Bakterien- und Pilzbefalls, beispielsweise p-Chlor-m-kresol, Chloressigsäureamid und vor allem 1,2-Benzisothiazolin-3-on, 5-Chlor-2-methyl-isothiazolin-3-on und 2-Methyl-isothiazolin-3-on
- pH-Wert-regulierende Substanzen, insbesondere Puffermischungen, enthaltend beispielsweise Alkalimetallhydroxide, Mono-, Di- und Triethanolamin, Schwefelsäure, Phosphorsäure, Essigsäure und die Alkalimetall- und Ammoniumsalze der genannten Säuren
- Antischaummittel zur Unterdrückung des Schäumens beim Mahlen der Farbmittelzubereitung und beim Färben mit ihr, beispielsweise Fettalkohole, Fettalkoholalkoxylate, Alkylester von Carbonsäuren und Phosphorsäure sowie siliconhaltige Entschäumer
- Viskositätsregler zur Verbesserung des rheologischen Verhaltens von Farbmittelzubereitungen, beispielsweise zur Viskositätsherabsetzung Harnstoff, N-Methylacetamid, Toluolsulfonate, Cumolsulfonate und Naphthalinsulfonate und zur Viskositätserhöhung Cellulose-Derivate und Polyacrylate
- Netzmittel zur Verbesserung der Redispergierbarkeit von pulverförmigen Farbmitteln, beispielsweise Sulfobernsteinsäurealkylester, Dialkylsulfimide und Fettalkoholalkoxylate
- Entstaubungsmittel zur Vermeidung der Staubbildung beim Umgang mit pulverförmigen Farbmittelzubereitungen, insbesondere Mischungen aus einer Ölkomponente und einem geeigneten Emulgatorsystem.

Die Herstellung der erfindungsgemäßen Farbmittelzubereitungen erfolgt in an sich bekannter Weise durch Mahlen und Dispergieren des Farbmittels in einer wäßrigen Mischung aus den wasserlöslichen Salzen der Copolymerisate A, der Dextrine und gegebenenfalls Proteine B, weiteren Dispergiermitteln C und zusätzlicher Hilfsmittel. Die Dispergierung wird in der Regel in Knetern, Kugelmühlen, Rührwerkskugelmühlen oder in Attritoren vorgenommen. Hierbei kann das Farbmittel in Form eines trockenen Pulvers oder vorzugsweise in Form des bei der Herstellung des Farbmittels anfallenden wasserhaltigen Preßkuchens eingesetzt werden.

In einer bevorzugten Ausführungsform legt man zweckmäßigerweise jedoch zunächst nur 10 bis 50 Gew.-%, bevorzugt 20 bis 40 Gew.-% der Menge des insgesamt benötigten Dispergiermittels in Form einer 20 bis 40 gew.-%igen wäßrigen Lösung vor, vermischt diese Lösung mit dem Farbmittel unter dessen Feinvermahlung und setzt die Restmenge des Dispergiermittels erst nach Erreichen des gewünschten Vermahlungsgrads zu. Die Zubereitung wird wie üblich getrocknet bzw. gegebenenfalls durch Verdünnung mit Wasser auf die gewünschte Farbstärke eingestellt. Vorzugsweise setzt man zur Verdünnung ein Gemisch aus Wasser und Retentionsmitteln, die der Verdunstung des Wassers entgegenwirken, ein und zwar bevorzugt nach Beendigung der Mahlung.

Zur Herstellung der erfindungsgemäßen festen Zubereitungen wird die erhaltene wäßrige feinteilige Farbmitteldispersion in der Regel in bekannter Weise in üblichen Sprühtrocknern bei Gaseingangstemperaturen zwischen 80 und 200°C, vorzugsweise zwischen 100 und 150°C, je nach der thermischen Stabilität des Farbmittels, getrocknet.

Unter Trockenzubereitungen sind solche zu verstehen, die noch etwa bis zu 10 Gew.-% Wasser enthalten, um die vollständige Austrocknung zu unterbinden und damit die Redispergierbarkeit zu erleichtern.

Die erfindungsgemäßen Farbmittelzubereitungen sind für alle Färbe- und Druckverfahren geeignet.

Die erfindungsgemäßen als Dispergiermittel für Farbmittelzubereitungen geeigneten Mischungen sind nahezu vollständig biologisch abbaubar oder eliminierbar, d.h. sie werden am Klärschlamm adsorbiert und sind somit nicht umweltbelastend. Der biologische Abbaugrad im Zahn-Wellens-Test gemäß DIN 38 412 Teil 25, definiert durch die Bestimmung des chemischen Sauerstoffbedarfs während des Abbauvorgangs ist in der Regel größer als 80 %. Die üblicherweise als Dispergiermittel für Farbmittelzubereitungen verwendeten Ligninsulfonate und Naphthalinsulfonsäure-Formaldehyd-Kondensate zeigen dagegen meist Abbaugrade unter 50 %.

Der Zahn-Wellens-Test bedient sich eines belebten Schlammes mit einer Mischung verschiedener Mikroorganismen und mineralischer Nährstoffe zum biologischen Abbau der Prüfsubstanz. Die wäßrige Lösung dieser drei Bestandteile wird während einer bestimmten Zeit (bis zu 28 Tagen) bei einer konstanten Temperatur von ca. 22°C, unter weitgehendem Lichtausschluß belüftet. Die Abnahme der Menge der Prüfsubstanz wird durch Bestimmung des chemischen Sauerstoffbedarfs ermittelt.

Die Dispergiermittel gemäß der Erfindung weisen eine hohe Dispergierwirkung auf. Die mit ihnen hergestellten Farbmitteldispersionen sind sehr feinteilig und zugleich stabil. Die erfindungsgemäßen festen Farbmittelzubereitungen zeichnen sich gegenüber den bekannten Zubereitungen durch ihre hohe Wärmestabilität bei der Trocknung aus. Das erhaltene Pulver bzw. Granulat zeigt eine längere Lagerfähigkeit und hohe Redispergierbarkeit in Wasser.

Als weiterer Vorteil der Mischungen gemäß der Erfindung ist ihre helle Farbe anzuführen, weswegen sie die Färbungen nicht beeinträchtigen. Dies ist besonders bei brillanten Farbtönen von Bedeutung.

Des weiteren ist die geringe Migrationsneigung der Farbmittel bei Kontinue-Färbeverfahren zu nennen, d.h. die Färbungen weisen eine höhere Egalität auf.

### Beispiele

### Beispiele 1 bis 11

### A) Herstellung von Dispergiermitteln für die Farbmittelzubereitungen

Gemäß der EP-0 100 443 wurden Copolymerisate aus Styrol und Acrylsäure im Gewichtsverhältnis von 60 : 40 und Styrol, Acrylsäure und Maleinsäureanhydrid im Gewichtsverhältnis 60 : 10 : 30 durch kontinuierliche Massepolymerisation hergestellt. Copolymerisate aus Styrol, α-Methylstyrol und Acrylsäure im Gewichtsverhältnis 35 : 35 : 30, aus Styrol, Acrylsäure und 2-Acrylamido-2-methylpropansulfonsäure im Gewichtsverhältnis 70 : 20 : 10 und solche aus 70 Gew.-% Styrol und 30 Gew.-% Acrylsäure wurden durch radikalische Lösungspolymerisation gewonnen. Die Copolymerisate wurden jeweils durch Umsetzung in wäßrigem Medium bei ca. 60°C mit Ammoniak oder Natriumhydroxid in wasserlösliche Salze überführt. Der Neutralisationsgrad betrug jeweils 80 mol-% und die Feststoffgehalte der Lösungen lagen zwischen 20 und 40 Gew.-% bei pH-Werten von 8 bis 9. Zu diesen wäßrigen Lösungen wurden die in Tabelle 1 aufgeführten Mengen Dextrine und/oder Proteine sowie weitere Dispergiermittel zugesetzt.

Diese Lösungen wurden als Dispergiermittel für Farbmittelzubereitungen verwendet.

### Beispiele 12 bis 16

### B) Herstellung von flüssigen Farbmittelzubereitungen

Die in Tabelle 2 genannten Mengen, jeweils bezogen auf die wasserfreie Substanz (= 100 Gew.-%), an Farbmittel, die in Form ihrer wasserfeuchten Preßkuchen eingesetzt wurden, und 35 Gew.-% der Dispergiermittel gemäß Tabelle 1 aus neutralisierten Copolymerisaten A, Dextrinen und/oder Proteinen B und weiteren Dispergiermitteln C wurden unter intensivem Rühren mit soviel Wasser angeteigt, daß der Trockengehalt durchschnittlich 35 Gew.-% betrug. Anschließend wurde die Mischung nach den in Tabelle 2 genannten Bedingungen (Mahlung mittels einer Rührwerkskugelmühle : Anzahl der Mahlvorgänge bei einer Durchlaufzeit durch die Mühle von ca. 45 Minuten, Attritormahlung : Dauer) bis zur Erreichung einer guten Feinverteilung, charakterisiert durch die Schleuderwerte, gemahlen, und danach wurde die Restmenge des Dispergiermittels sowie ein Gemisch aus Wasser und dem Retentionsmittel zugegeben. Der pH-Wert der Dispersionen wurde auf den jeweils angegebenen Wert durch Zugabe von Essigsäure oder Natronlauge eingestellt.

### Beispiele 17 bis 23

### C) Herstellung von festen Farbmittelzubereitungen

Die in Tabelle 3 genannten Mengen, jeweils bezogen auf die wasserfreie Substanz (= 100 Gew.-%), an Farbmitteln, die in Form ihrer wasserfeuchten Preßkuchen eingesetzt wurden, und 25 Gew.-% der Dispergiermittel gemäß Tabelle 1 aus neutralisierten Copolymerisaten A, Dextrinen und/oder Proteinen B und weiteren Dispergiermitteln C wurden unter intensivem Rühren mit der benötigten Menge an Wasser angeteigt, wobei sich diese Menge nach dem Feststoffgehalt der Dispersion vor der Sprühtrocknung richtete. Anschließend wurde die Mischung bei einem pH-Wert von 8 bis 9 im Falle der Farbmittel F/6, F/7 und F/10 oder 10 bis 11 im Falle der Farbmittel F/4, F/5, F/8 und F/9 nach den in Tabelle 3 genannten Bedingungen (Mahlung mittels einer Rührwerkskugelmühle : Anzahl der Mahlvorgänge bei einer Durchlaufzeit durch die Mühle von ca. 45 Minuten, Attritormahlung : Dauer) bis zur Erreichung einer guten Feinverteilung, charakterisiert durch die Schleuderwerte, gemahlen.

Danach wurde die Restmenge des Dispergiermittels sowie die benötigte Menge an Wasser zugegeben, wobei sich diese Menge nach dem Feststoffgehalt der Dispersion vor der Sprühtrocknung richtete. Die Sprühtrocknung wurde jeweils bei den in Tabelle 3 angegebenen Temperaturen durchgeführt.

### Anwendungstechnische Eigenschaften

Als Maß für die Qualität der erfindungsgemäßen Farbmitteldispersionen wurde die Feinverteilung durch den Schleuderwert nach Richter und Vescia, Melliand Textilberichte, 1965, Heft 6, S. 621-625, charakterisiert.

Die Zahlenwerte entsprechen dem Farbmittelanteil in %, der beim Zentrifugieren bei den Umdrehungszahlen von 1000, 2000 und 4000 pro Minute nach 5 Minuten sedimentiert (1. bis 3. Wert) und der zum Schluß noch in der Dispersion verbleibt (4. Wert).

Farbmittel mit kleinen Sedimentationswerten und hohem Endwert sind besonders feinteilig.

Tabellen 2 und 3 zeigen die Ergebnisse dieser Bestimmung.

In allen Fällen zeigten die erfindungsgemäßen Farbmitteldispersionen gute Feinverteilungen.

### Bedeutung der Abkürzungen in den Tabellen 1, 2 und 3

### Neutralisierte Copolymerisate A

- A/1 =: Copolymerisat aus Styrol und Acrylsäure im Gewichtsverhältnis von 60 : 40 in Form einer 40%igen wäßrigen Lösung des Natriumsalzes, K-Wert 18
- A/2 =: Copolymerisat aus Styrol und Acrylsäure im Gewichtsverhältnis von 60 : 40 in Form einer 35%igen wäßrigen Lösung des Ammoniumsalzes, K-Wert 17
- A/3 =: Copolymerisat aus Styrol, Acrylsäure und Maleinsäureanhydrid im Gewichtsverhältnis von 60 : 10 : 30 in Form einer 22%igen wäßrigen Lösung des Ammoniumsalzes, K-Wert 27
- A/4 =: Copolymerisat aus Styrol, α-Methylstyrol und Acrylsäure im Gewichtsverhältnis 35 : 35 : 30 in Form einer 30%igen wäßrigen Lösung des Natriumsalzes, K-Wert 25
- A/5 =: Copolymerisat aus Styrol, Acrylsäure und 2-Acrylamido-2-methylpropansulfonsäure im Gewichtsverhältnis 70 : 20 : 10 in Form einer 30%igen wäßrigen Lösung des Natriumsalzes, K-Wert 16
- A/6 =: Copolymerisat aus Styrol und Acrylsäure im Gewichtsverhältnis 70 : 30 in Form einer 30%igen wäßrigen Lösung des Natriumsalzes, K-Wert 37

### Komponente B

- B/1 =: Dextrin
- B/2 =: Casein
- B/3 =: Collagen

### Dispergiermittel C

- C/1 =: Ethylendiamin mit 68 mol Propylenoxid und 74 mol Ethylenoxid
- C/2 =: Oleylmethyltaurid
- C/3 =: Naphthalinsulfonsäure-Formaldehyd-Kondensat

### Farbmittel F

- F/1 =: Pigment Black 7, C.I. 77266 (Ruß)
- F/2 =: Pigment Blue 15 : 1, C.I. 74160 (Kupferphthalocyaninpigment)
- F/3 =: Disperse Blue 79, C.I. 11345 (Azofarbstoff)
- F/4 =: Vat Blue 6, C.I. 69825 (Anthrachinonfarbstoff)
- F/5 =: Vat Blue 4, C.I. 69800 (Anthrachinonfarbstoff)
- F/6 =: Dipserse Blue 60, C.I. 61100 (Anthrachinonfarbstoff)
- F/7 =: Disperse Red 60, C.I. 60756 (Anthrachinonfarbstoff)
- F/8 =: Vat Green 1, C.I. 59825 (Violanthronfarbstoff)
- F/9 =: Vat Green 13 (Anthrachinonfarbstoff)
- F/10=: Disperse Blue 148 (Azofarbstoff)

### Mahlungsart M

- M/1 =: Attritormahlung
- M/2 =: Mahlung mittels einer Rührwerkskugelmühle

Die Mischungen der Beispiele Nr. 2, 3, 6 und 11 in Tabelle 1 stellen nicht beanspruchte Dispergiermittel dar.

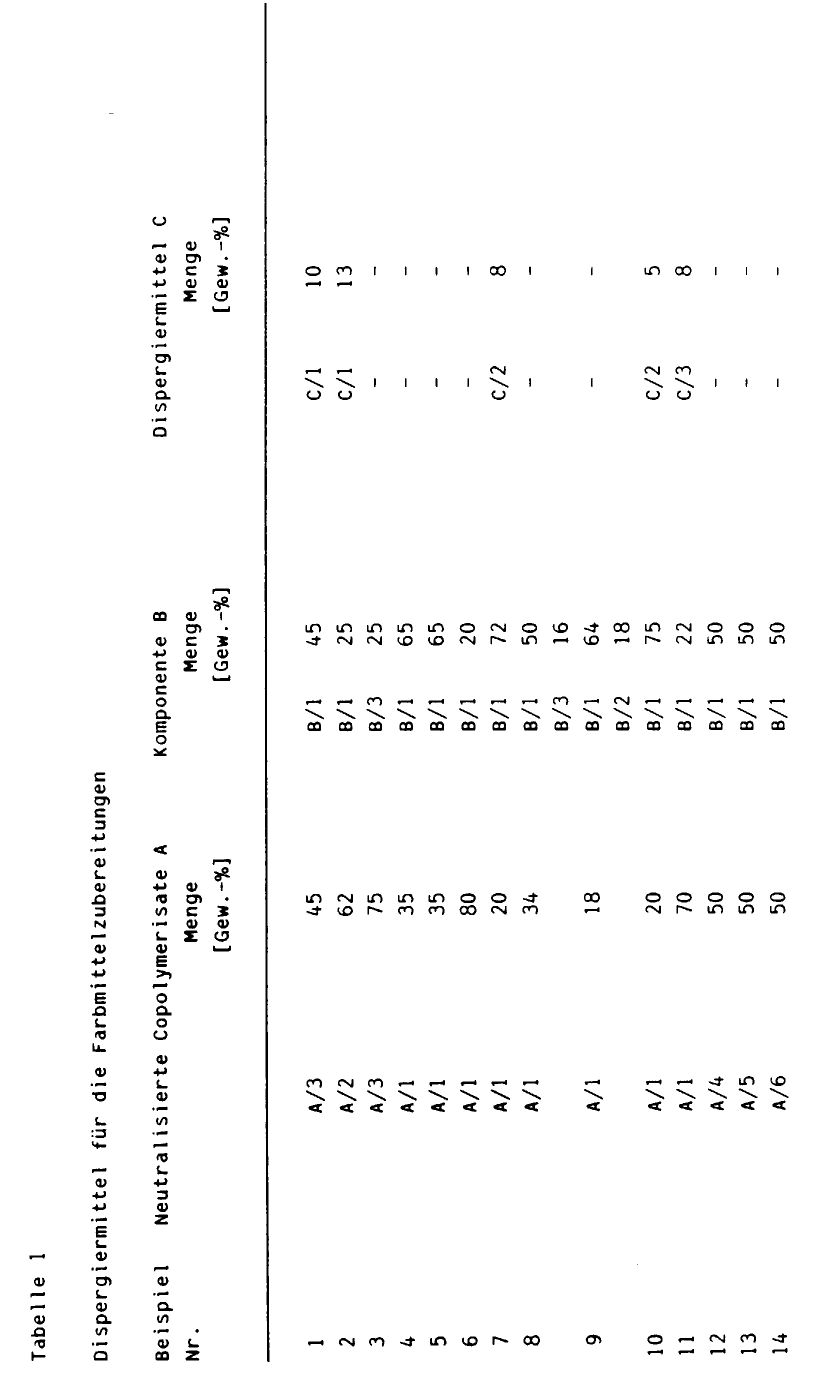

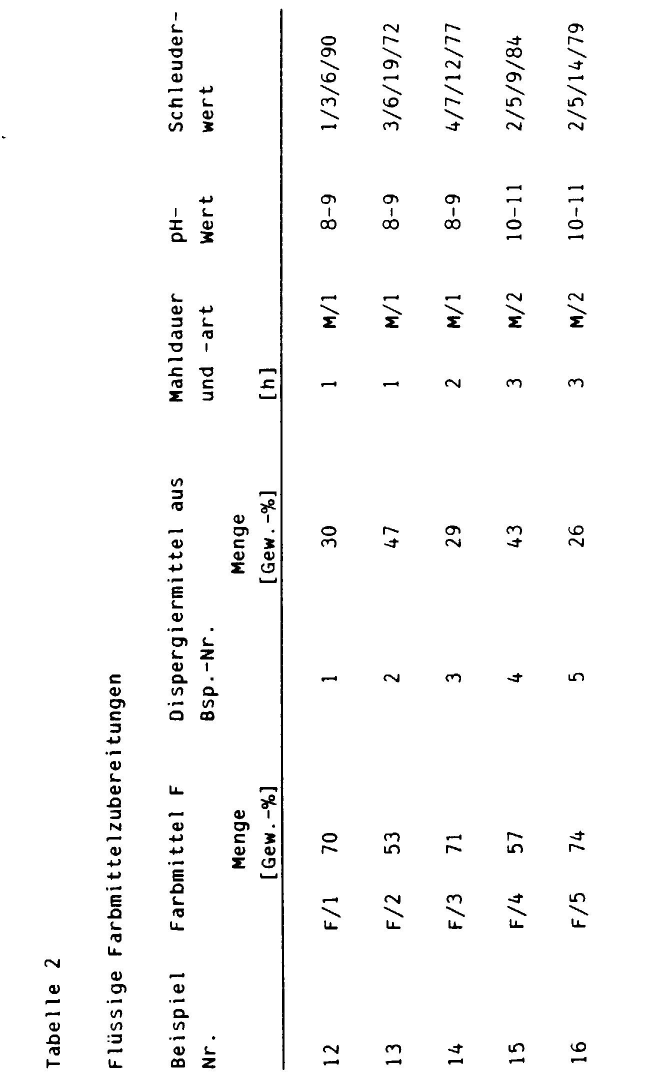

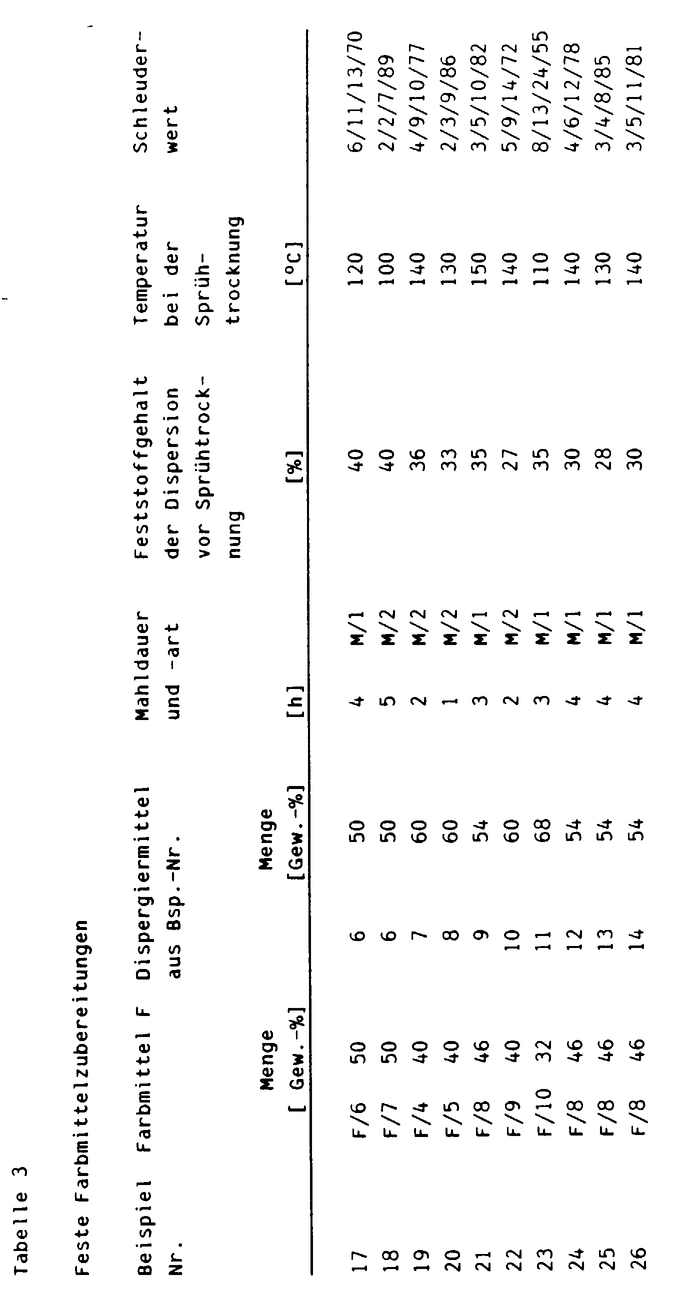

## Patentansprüche (Patentansprüche für folgende(n) Vertragsstaat(en): AT, BE, CH, DE, DK, FR, GB, IT, LI, NL, SE)

1. Als Dispergiermittel für Farbmittelzubereitungen geeignete Mischungen aus
A) 10 bis 70 Gew.-% eines wasserlöslichen Salzes eines Copolymerisates aus
a) 40 bis 80 Gew.-% eines Vinylaromaten,
b) 20 bis 60 Gew.-% einer olefinisch ungesättigten Säure und/oder eines olefinisch ungesättigten Säureanhydrids und
c) 0 bis 20 Gew.-% weiterer Monomerer,
B) 30 bis 90 Gew.-% eines Dextrins und gegebenenfalls eines natürlichen Proteins und
C) 0 bis 10 Gew.-% weiterer üblicher Dispergiermittel.

2. Als Dispergiermittel für Farbmittelzubereitungen geeignete Mischungen nach Anspruch 1 aus
A) 20 bis 50 Gew.-% eines wasserlöslichen Salzes eines Copolymerisates aus
a) 50 bis 75 Gew.-% eines Vinylaromaten,
b) 25 bis 50 Gew.-% einer olefinisch ungesättigten Säure und/oder eines olefinisch ungesättigten Säureanhydrids und
c) 0 bis 20 Gew.-% weiterer Monomerer,
B) 50 bis 80 Gew.-% eines Dextrins und gegebenenfalls eines natürlichen Proteins und
C) 0 bis 10 Gew.-% weiterer üblicher Dispergiermittel.

3. Verwendung von Mischungen gemäß Anspruch 1 oder 2 als Dispergiermittel für Farbmittelzubereitungen.

4. Verfahren zur Herstellung von trockenen oder flüssig-wäßrigen Farbmittelzubereitungen, dadurch gekennzeichnet, daß man 10 bis 50 Gew.-% der Menge des insgesamt benötigten Dispergiermittels gemäß Anspruch 1 oder 2 in Form einer 20 bis 40 gew.-%igen wäßrigen Lösung vorlegt, diese Lösung mit dem Farbmittel unter Feinvermahlung des Farbmittels innig vermischt, nach Erreichen des gewünschten Vermahlungsgrads die Restmenge des Dispergiermittels zusetzt und die Zubereitung wie üblich trocknet bzw. gegebenenfalls durch Verdünnung mit Wasser auf die gewünschte Farbstärke einstellt.

5. Feste oder flüssig-wäßrige Farbmittelzubereitungen, enthaltend als Dispergiermittel eine Mischung gemäß Anspruch 1 oder 2.

6. Feste Farbmittelzubereitungen nach Anspruch 5, enthaltend 0,1 bis 10 Gew.-Teile des Dispergiermittels pro Gew.-Teil des Farbmittels.

7. Flüssig-wäßrige Farbmittelzubereitungen nach Anspruch 5, enthaltend 0,1 bis 5 Gew.-Teile des Dispergiermittels pro Gew.-Teil des Farbmittels.

## Patentansprüche (Patentansprüche für folgende(n) Vertragsstaat(en): ES)

1. Verfahren zur Herstellung eines Dispergiermittels für Farbmittelzubereitungen, dadurch gekennzeichnet, daß man hierzu
A) 10 bis 70 Gew.-% eines wasserlöslichen Salzes eines Copolymerisates aus
a) 40 bis 80 Gew.-% eines Vinylaromaten,
b) 20 bis 60 Gew.-% einer olefinisch ungesättigten Säure und/oder eines olefinisch ungesättigten Säureanhydrids und
c) 0 bis 20 Gew.-% weiterer Monomerer,
B) 30 bis 90 Gew.-% eines Dextrins und gegebenenfalls eines natürlichen Proteins und
C) 0 bis 10 Gew.-% weiterer üblicher Dispergiermittel
miteinander mischt.

2. Verfahren zur Herstellung eines Dispergiermittels für Farbmittelzubereitungen nach Anspruch 1, dadurch gekennzeichnet, daß man hierzu
A) 20 bis 50 Gew.-% eines wasserlöslichen Salzes eines Copolymerisates aus
a) 50 bis 75 Gew.-% eines Vinylaromaten,
b) 25 bis 50 Gew.-% einer olefinisch ungesättigten Säure und/oder eines olefinisch ungesättigten Säureanhydrids und
c) 0 bis 20 Gew.-% weiterer Monomerer,
B) 50 bis 80 Gew.-% eines Dextrins und gegebenenfalls eines natürlichen Proteins und
C) 0 bis 10 Gew.-% weiterer üblicher Dispergiermittel
miteinander mischt.

3. Verfahren zum Dispergieren von Farbmittelzubereitungen, dadurch gekennzeichnet, daß man hierbei Mischungen gemäß Anspruch 1 oder 2 als Dispergiermittel verwendet.

4. verfahren zur Herstellung von trockenen oder flüssig-wäßrigen Farbmittelzubereitungen, dadurch gekennzeichnet, daß man 10 bis 50 Gew.-% der Menge des insgesamt benötigten Dispergiermittels gemäß Anspruch 1 oder 2 in Form einer 20 bis 40 gew.-%igen wäßrigen Lösung vorlegt, diese Lösung mit dem Farbmittel unter Feinvermahlung des Farbmittels innig vermischt, nach Erreichen des gewünschten Vermahlungsgrads die Restmenge des Dispergiermittels zusetzt und die Zubereitung wie üblich trocknet bzw. gegebenenfalls durch Verdünnung mit wasser auf die gewünschte Farbstärke einstellt.

5. Verfahren zur Herstellung von festen oder flüssig-wäßrigen Farbmittelzubereitungen, dadurch gekennzeichnet, daß man hierbei als Dispergiermittel eine Mischung gemäß Anspruch 1 oder 2 einsetzt.

6. Verfahren zur Herstellung von festen Farbmittelzubereitungen nach Anspruch 5, dadurch gekennzeichnet, daß man hierbei 0,1 bis 10 Gew.-Teile des Dispergiermittels pro Gew.-Teil des Farbmittels einsetzt.

7. Verfahren zur Herstellung von flüssig-wäßrigen Farbmittelzubereitungen nach Anspruch 5, dadurch gekennzeichnet, daß man hierbei 0,1 bis 5 Gew.-Teile des Dispergiermittels pro Gew.-Teil des Farbmittels einsetzt.

## Claims (Claims for the following Contracting State(s): AT, BE, CH, DE, DK, FR, GB, IT, LI, NL, SE)

1. A composition of matter suitable for use as dispersant for colorant formulations, comprising
A) from 10 to 70 % by weight of a water-soluble salt of a copolymer of
a) from 40 to 80 % by weight of an aromatic vinyl compound,
b) from 20 to 60 % by weight of an olefinically unsaturated acid and/or anhydride and
c) from 0 to 20 % by weight of further monomer,
B) from 30 to 90 % by weight of a dextrin and optionally of a natural protein and
C) from 0 to 10 % by weight of a further customary dispersant.

2. A composition of matter as claimed in claim 1, comprising
A) from 20 to 50 % by weight of a water-soluble salt of a copolymer of
a) from 50 to 75 % by weight of an aromatic vinyl compound,
b) from 25 to 50 % by weight of an olefinically unsaturated acid and/or anhydride and
c) from 0 to 20 % by weight of further monomer,
B) from 50 to 80 % by weight of a dextrin and optionally of a natural protein and
C) from 0 to 10 % by weight of a further customary dispersant.

3. The use of a composition of matter as claimed in claim 1 or 2 as dispersant for colorant formulations.

4. A process for preparing a dry or liquid/aqueous colorant formulation, which comprises initially charging from 10 to 50 % by weight of the total amount required of dispersant of claim 1 or 2 in the form of a 20-40 % strength by weight aqueous solution, intimately mixing this solution with the colorant by finely grinding the colorant, adding the remaining quantity of dispersant once the desired degree of fineness is reached, and drying the formulation in a conventional manner or, alternatively, diluting it to the desired color strength with water.

5. A solid or liquid/aqueous colorant formulation containing a composition of matter as claimed in claim 1 or 2 as dispersant.

6. A solid colorant formulation as claimed in claim 5 containing from 0.1 to 10 parts by weight of the dispersant per part by weight of the colorant.

7. A liquid/aqueous colorant formulation as claimed in claim 5 containing from 0.1 to 5 parts by weight of the dispersant per part by weight of the colorant.

## Claims (Claims for the following Contracting State(s): ES)

1. A process for preparing a dispersant for colorant formulations, which comprises mixing together
A) from 10 to 70 % by weight of a water-soluble salt of a copolymer of
a) from 40 to 80 % by weight of an aromatic vinyl compound,
b) from 20 to 60 % by weight of an olefinically unsaturated acid and/or anhydride and
c) from 0 to 20 % by weight of further monomer,
B) from 30 to 90 % by weight of a dextrin and optionally of a natural protein and
C) from 0 to 10 % by weight of a further customary dispersant.

2. A process as claimed in claim 1, which comprises mixing together
A) from 20 to 50 % by weight of a water-soluble salt of a copolymer of
a) from 50 to 75 % by weight of an aromatic vinyl compound,
b) from 25 to 50 % by weight of an olefinically unsaturated acid and/or anhydride and
c) from 0 to 20 % by weight of further monomer,
B) from 50 to 80% by weight of a dextrin and optionally of a natural protein and
C) from 0 to 10 % by weight of a further customary dispersant.

3. A process for dispersing colorant formulations, which comprises using a composition of matter as claimed in claim 1 or 2 as dispersant.

4. A process for preparing a dry or liquid/aqueous colorant formulation, which comprises initially charging from 10 to 50 % by weight of the total amount required of dispersant of claim 1 or 2 in the form of a 20-40 % strength by weight aqueous solution, intimately mixing this solution with the colorant by finely grinding the colorant, adding the remaining quantity of dispersant once the desired degree of fineness is reached, and drying the formulation in a conventional manner or, alternatively, diluting it to the desired color strength with water.

5. A process for preparing a solid or liquid/aqueous colorant formulation, which comprises using a composition of matter as claimed in claim 1 or 2 as dispersant.

6. A process for preparing a solid colorant formulation as claimed in claim 5, which comprises using from 0.1 to 10 parts by weight of the dispersant per part by weight of the colorant.

7. A process for preparing a liquid/aqueous colorant formulation as claimed in claim 5, which comprises using from 0.1 to 5 parts by weight of the dispersant per part by weight of the colorant.

## Revendications (Revendications pour l'(les) Etat(s) contractant(s) suivant(s): AT, BE, CH, DE, DK, FR, GB, IT, LI, NL, SE)

1. Mélanges convenant comme agents dispersifs pour des préparations de colorants, se composant de
A) 10 à 70% en poids d'un sel soluble dans l'eau d'un copolymère constitué de
a) 40 à 80% en poids d'un composé vinylaromatique,
b) 20 à 60% en poids d'un acide à insaturation oléfinique et/ou d'un anhydride d'acide à insaturation oléfinique et
c) 0 à 20% en poids d'autres monomères,
B) 30 à 90% en poids d'une dextrine et, éventuellement, d'une protéine naturelle et
C) 0 à 10% en poids d'autres agents dispersifs usuels.

2. Mélanges convenant comme agents dispersifs pour des préparations de colorants suivant la revendication 1, se composant de
A) 20 à 50% en poids d'un sel soluble dans l'eau d'un copolymère constitué de
a) 50 à 75% en poids d'un composé vinylaromatique,
b) 25 à 50% en poids d'un acide à insaturation oléfinique et/ou d'un anhydride d'acide à insaturation oléfinique et
c) 0 à 20% en poids d'autres monomères,
B) 50 à 80% en poids d'une dextrine et, éventuellement, d'une protéine naturelle et
C) 0 à 10% en poids d'autres agents dispersifs usuels.

3. Utilisation de mélanges suivant la revendication 1 ou 2, à titre d'agents dispersifs pour des préparations de colorants.

4. Procédé de fabrication de préparations de colorants sèches ou liquides-aqueuses, caractérisé en ce que l'on dispose au préalable 10 à 50% en poids de la quantité de l'agent dispersif nécessaire au total suivant la revendication 1 ou 2, sous forme d'une solution aqueuse à 20 à 40% en poids, on mélange intimement cette solution au colorant sous fin broyage du colorant, puis, après avoir atteint le degré de broyage souhaité, on ajoute la quantité résiduelle de l'agent dispersif et on sèche la préparation de la manière habituelle, ou bien on en règle éventuellement le pouvoir colorant ou tinctorial à la valeur souhaitée par dilution à l'eau.

5. Préparations de colorants solides ou liquides-aqueuses, contenant, à titre d'agent dispersif, un mélange suivant la revendication 1 ou 2.

6. Préparations de colorants solides suivant la revendication 5, contenant de 0,1 à 10 parties en poids de l'agent dispersif par partie en poids du colorant.

7. Préparations de colorants liquides-aqueuses suivant la revendication 5, contenant de 0,1 à 5 parties en poids de l'agent dispersif par partie en poids du colorant.

## Revendications (Revendications pour l'(les) Etat(s) contractant(s) suivant(s): ES)

1. Procédé de fabrication d'un agent dispersif pour des préparations de colorants, caractérisé en ce que, à cette fin, on mélanges les uns aux autres
A) 10 à 70% en poids d'un sel soluble dans l'eau d'un copolymère constitué de
a) 40 à 80% en poids d'un composé vinylaromatique,
b) 20 à 60% en poids d'un acide à insaturation oléfinique et/ou d'un anhydride d'acide à insaturation oléfinique et
c) 0 à 20% en poids d'autres monomères,
B) 30 à 90% en poids d'une dextrine et, éventuellement, d'une protéine naturelle et
C) 0 à 10% en poids d'autres agents dispersifs usuels.

2. Procédé de fabrication d'un agent dispersif pour des préparations de colorants suivant la revendication 1, caractérisé en ce que, à cette fin, on mélanges les uns aux autres
A) 20 à 50% en poids d'un sel soluble dans l'eau d'un copolymère constitué de
a) 50 à 75% en poids d'un composé vinylaromatique,
b) 25 à 50% en poids d'un acide à insaturation oléfinique et/ou d'un anhydride d'acide à insaturation oléfinique et
c) 0 à 20% en poids d'autres monomères,
B) 50 à 80% en poids d'une dextrine et, éventuellement, d'une protéine naturelle et
C) 0 à 10% en poids d'autres agents dispersifs usuels.

3. Procédé de dispersion de préparations de colorants, caractérisé en ce que l'on utilise, à cette fin, des mélanges suivant la revendication 1 ou 2, à titre d'agents dispersifs.

4. Procédé de fabrication de préparations de colorants sèches ou liquides-aqueuses, caractérisé en ce que l'on dispose au préalable 10 à 50% en poids de la quantité de l'agent dispersif nécessaire au total suivant la revendication 1 ou 2, sous forme d'une solution aqueuse à 20 à 40% en poids, on mélange intimement cette solution au colorant sous fin broyage du colorant, puis, après avoir atteint le degré de broyage souhaité, on ajoute la quantité résiduelle de l'agent dispersif et on sèche la préparation de la manière habituelle, ou bien on en règle éventuellement le pouvoir colorant ou tinctorial à la valeur souhaitée par dilution à l'eau.

5. Procédé de fabrication de préparations de colorants solides ou liquides-aqueuses, caractérisé en ce que l'on utilise, à cette fin, un mélange suivant la revendication 1 ou 2, à titre d'agent dispersif.

6. Procédé de fabrication de préparations de colorants solides suivant la revendication 5, caractérisé en ce que l'on utilise, à cette fin, de 0,1 à 10 parties en poids de l'agent dispersif par partie en poids du colorant.

7. Procédé de fabrication de préparations de colorants liquides-aqueuses suivant la revendication 5, caractérisé en ce que l'on utilise, à cette fin, de 0,1 à 5 parties en poids de l'agent dispersif par partie en poids du colorant.
